(19) Europäisches Patentamt / European Patent Office / Office européen des brevets

(11) **EP 2 805 330 B1**

(12) **EUROPEAN PATENT SPECIFICATION**

(45) Date of publication and mention
of the grant of the patent:
**14.03.2018 Bulletin 2018/11**

(21) Application number: **13705837.6**

(22) Date of filing: **10.01.2013**

(51) Int Cl.:
*G21B 3/00* (2006.01)    *H05H 6/00* (2006.01)

(86) International application number:
**PCT/IB2013/050218**

(87) International publication number:
**WO 2013/108159 (25.07.2013 Gazette 2013/30)**

(54) **NUCLEAR REACTOR CONSUMING NUCLEAR FUEL THAT CONTAINS ATOMS OF ELEMENTS HAVING A LOW ATOMIC NUMBER AND A LOW MASS NUMBER**

KERNREAKTOR MIT EINEM KERNBRENNSTOFF MIT ATOMEN VON ELEMENTEN MIT NIEDRIGER ATOMZAHL UND NIEDRIGER MASSENZAHL

RÉACTEUR NUCLÉAIRE CONSOMMANT DU COMBUSTIBLE NUCLÉAIRE QUI CONTIENT DES ATOMES D'ÉLÉMENTS AYANT UN NOMBRE ATOMIQUE FAIBLE ET UN NOMBRE DE MASSE FAIBLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **16.01.2012 IT GE20120004**

(43) Date of publication of application:
**26.11.2014 Bulletin 2014/48**

(73) Proprietor: **Clean Nuclear Power LLC**
**6900 Lugano (CH)**

(72) Inventors:
• **SRIVASTAVA, Yogendra Narain**
  **CH-6900 Lugano (CH)**
• **WIDOM, Allan**
  **CH-6900 Lugano (CH)**

(74) Representative: **Ferroni, Filippo et al**
**Metroconsult Genova S.r.l.**
**Via Palestro, 5**
**16122 Genova (IT)**

(56) References cited:
**WO-A1-2011/123338     WO-A2-00/72329**
**WO-A2-2006/119080     US-A1- 2003 152 184**
**US-A1- 2007 286 324     US-A1- 2011 255 645**

• **L. Larsen: "Commercializing a Next-generation Source of Safe Nuclear Energy - Low Energy Nuclear Reactions (LENRs)", Lattice Energy LLC1-10 , 20 April 2011 (2011-04-20), pages 1-61, XP002682426, Retrieved from the Internet: URL:http://www.slideshare.net/lewisglarsen /lattice-energy-llcnickelseed-lenr-network sapril-20-2011/download [retrieved on 2012-08-27]**

**Description**

In its most general aspect, the present invention relates to a nuclear reactor for consuming nuclear fuel that contains atoms of elements having a low atomic number Z and a low mass number A. In addition to that, a method for igniting and controlling this reactor is also described.

In case of a nuclear accident, it is well known that one of the dangers of a nuclear reactor employing Uranium or Plutonium (high Z and A elements) is intimately tied to the very long periods of time in which harmful products of resulting nuclear reactions remain radioactive by emitting biologically hazardous radiations. For the same reason, the disposal of radioactive waste products produced during normal operations of these reactors requires complex and costly operations requiring long-term disposal sites.

This problem has been faced by NASA contractors in 2000, and the results coming out from this research have been recently made publicly available (18th, July 2011) in the NASA Technical report NASA/CR-2003-212169 - "*Advanced Energetics for Aeronautical Applications*" (see Section 3.1.5.3, pg. 45-48). NASA identifies this new generation of nuclear reactors by using the term "*Proton Power Cells."* NASA contractors (University of Illinois and Lattice Energy LLC) have measured an excess heat ranging from 20% to 100% employing a thin film (about 300 angstroms) of Nickel, Titanium and/or Palladium loaded with hydrogen as nuclear fuel. The metallic film was immersed in an electrochemical system with 0.5 to 1.0 molar Lithium sulfates in normal water as the electrolyte. To explain the reaction mechanism, Dr. George Miley (University of Illinois) hypothesized the fusion of 20 protons with five atoms of Nickel-58 by creating an atom of a super-heavy element (A=310); this super-heavy atom rapidly should decay by producing stable fission elements and heat in the metal film.

More relevant excess heat in Nickel powder reacting with gaseous hydrogen is described in the international patent application PCT/IT2008/000532 (WO 2009/125444 A1) to Pascucci and Rossi. In this patent application, it is hypothesized that under moderate temperature and pressure conditions, a proton ($H^+$) can cross the Coulomb barrier, and fuse with an atom of Nickel by starting well-known decay reactions that produce excess heat.

In both cases, the inventors are unable to provide satisfactory explanations about the absence of high-energy radiation products: In the case of production of heavy elements, the presence of products having a relatively long half-life is expected but during Rossi's experiments, no high energy radiation has been measured during reactor stable operation. Moreover, both the mechanism of heavy element synthesis and the mechanism of fusion between protons and Nickel atoms under moderate conditions hypothesized respectively by Miley and Rossi lack scientific support.

On the contrary, the model described by Allan Widom and Lewis G. Larsen in the patent US 7,893,414 B2 (applicant: Lattice Energy LLC) can explain the above-mentioned phenomena by using well-known models and interactions.

The main point of Widom-Larsen model is the production of radiation renormalized heavy electrons, which have multiple functions in the reactions:

(i) The electrons plus collective low frequency electromagnetic energy catalyze the production of ultra low momentum neutrons (ULMN) by weak interactions. These neutrons can be captured in nanoparticle target materials such as Palladium, Nickel or Lithium by starting the decay reactions producing nuclear radiations.
(ii) The electrons convert high-energy radiation into lower energy radiation such as infra-red or soft X-ray which form the excess heat from nuclear reactions.

The first point allows the explanation of the occurrence of nuclear reaction under moderate temperature and pressure conditions without violating Coulomb's law or without accelerating atoms at a speed somewhat smaller than light speed necessary to produce super-heavy elements. The second point allows the explanation of the small quantity of radiation measured during the experiments and the presence, outside Rossi's reactor, of peaks of high-energy radiation only at the beginning and at the end of the operations, as measured by Prof. Francesco Celani (Istituto Nazionale di Fisica Nucleare - INFN - Frascati) during the experiment of 14th, January 2011 (see http://22passi.blogspot.com/2011/08/celani-risponde-sulla-misura-dei-gamma.html). Indeed, during the reactor transitions, the production of heavy electrons is reduced or stopped; hence gamma rays can come out from the reactor without being converted in lower energy radiations (heat and soft X-rays).

Another important aspect observed by Allan Widom and Lewis G. Larsen regards the production of heavy electrons: the heavy electrons are produced on a metallic substrate surface. This phenomenon involves the surface area of the metallic substrate, and can be thereby magnified by increasing the surface area if the nuclear fuel employs a metallic powder having adequate grain sizes.

Another example of energy release from hydrogenated nanoparticles irradiated by electromagnetic radiation is given in WO2011/123338 A1. In all the above-mentioned experiments, it was necessary to supply gaseous hydrogen into a reactor chamber requiring a hydrogen tank and/or an electrolysis system. The presence of the hydrogen tank can constitute a hazard in some applications such as automotive and/or home installations.

The present invention aims to solve these and other problems by providing a nuclear reactor for consuming nuclear fuel that preferably contains atoms of elements having a low atomic number Z and a low mass number A.

In addition to that, the present invention aims to solve these and other problems by providing a method for igniting and controlling a nuclear reactor consuming nuclear fuel that preferably contains atoms of elements having a low nuclear charge and atomic number.

The main idea of the present invention is the consumption of nuclear fuel that consists of a colloidal mixture of metallic powder in water.

Further advantageous features of the present invention are the subject of the attached claims.

The features of the invention are specifically set forth in the claims annexed to this description; such characteristics will be clearer from the following description of a preferred and non-exclusive embodiment shown in annexed drawings, wherein:

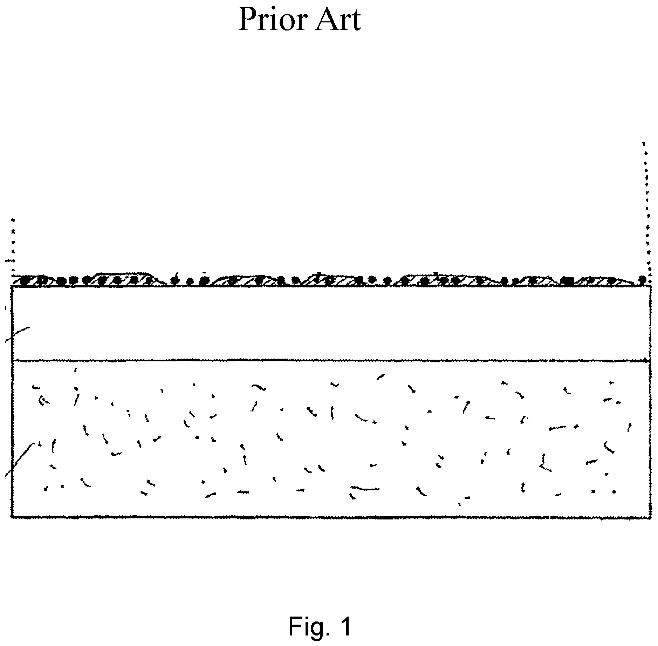

FIG. 1 shows a side view of the reactor described in the prior art document US 7,893,414 B2 (figure 22 of the US 7,893,414 B2 patent);

FIG. 2 shows a perspective view of the reactor according to the present invention;

FIG. 3 shows a front view of the reactor of Fig. 2.

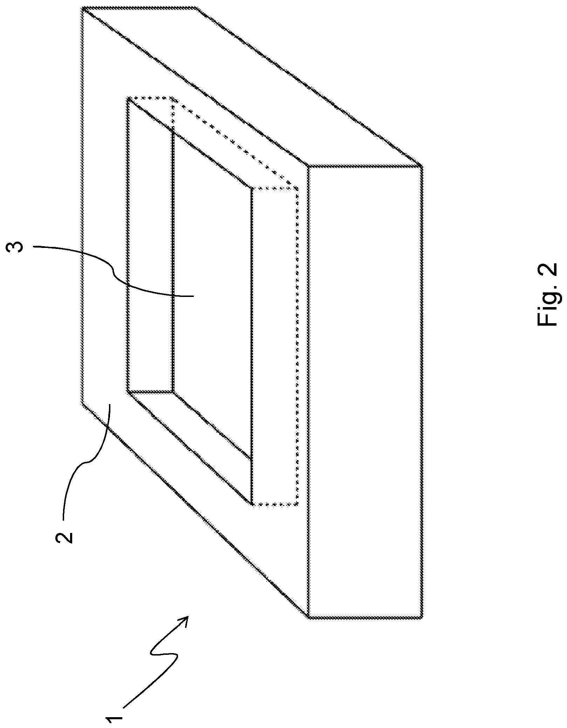

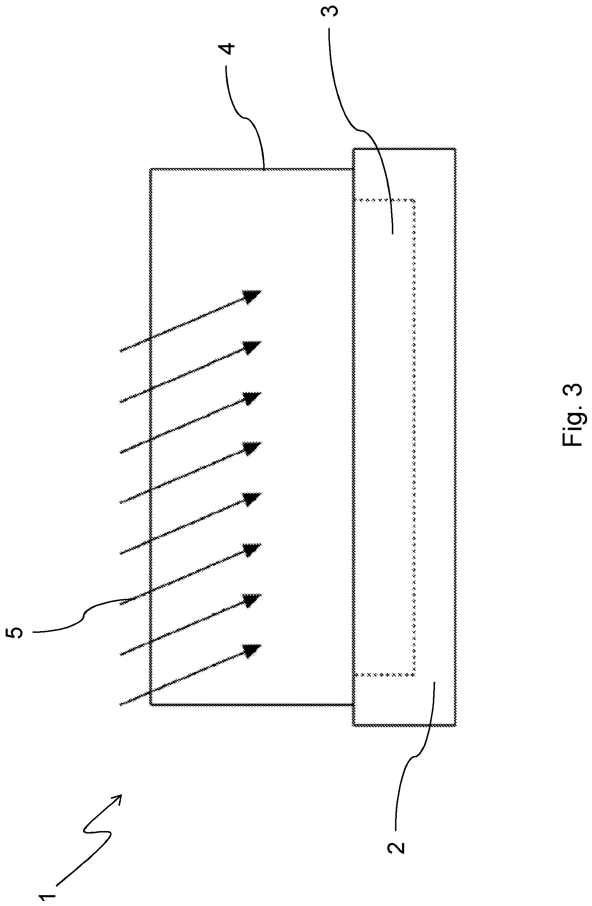

By referring to the drawings above, Figures 2-3 show the preferred embodiment that comprises a nuclear reactor 1 using a nuclear fuel (not shown in the attached figures).

The nuclear reactor 1 comprises a vessel 2, preferably box-shaped, containing a reaction chamber 3, which is topped and sealed by a sealed container 4; the latter is coupled hermetically with the vessel 2.

The vessel 2 is made of metal, preferably lead; the reactor's material is very important, since it must supply the following tasks: shielding internally produced radiations, in order to avoid dispersion of high-energy radiations; converting remaining high-energy radiations produced by the reactions into heat, in order to increase the efficiency of the reactor 1; transferring heat from the reaction chamber 3 to outside of the reactor 1.

The reaction chamber 3 is preferably a shallow trough, and contains the nuclear fuel. The nuclear fuel comprises a colloidal mixture of metallic powder in water. The colloidal mixture fills completely the reaction chamber 3, and a volume defined by the sealed container 4 above the reaction chamber 3 contains water vapor at saturated vapor pressure. The water could be deionized, although some ions are expected to be produced as soon as the nuclear reactions begin on the metallic powder surfaces of the colloidal mixture used in this invention. A dilute Lithium $Li^+X^-$ ionic solution would be more efficient in creating a possible Lithium cycle arising from the ULMN within the metal. Powders of inexpensive Nickel of approximately micron or submicron size would be efficient if the radiation creating the heavy electrons is in the optical frequency range. Other metals such as Titanium or Palladium can be used in the colloidal mixture, and they would work well but are quite expensive for fuel burning in commercial applications. Per mole, Nickel is less expensive than Titanium or Palladium by perhaps four orders of magnitude. The colloid should be fairly dense, perhaps a finite fraction of close packing.

In accordance with the invention, the radius of the grains has to be similar and comparable to the wavelength of electromagnetic radiation 5 necessary to produce heavy electrons. These electromagnetic radiation 5 are produced by a radiation source (not shown in the attached figures), such as a wood's lamp, a laser source, an antenna, or similar means, which may be placed inside or outside the sealed container 4, in order to reduce the thermal stress of the radiation source. For this reason, the sealed container 4 can be partially or totally made of a material that is transparent to the electromagnetic radiations 5 irradiated by the radiation source.

Inside the colloidal mixture, the water located within the spaces between the metallic powder grains of the colloid is ordered, and the contact between water and the metal grains produces metallic hydrides on the grains' surfaces. The electric dipole moments of the water molecules tend to be parallel. This ordered interfacial water tends to carry a negative charge because the protons from the molecules tend to be pushed into the metal forming a metallic hydride in the neighborhood of the grain's surfaces. The surface metallic hydrides give rise to surface plasma oscillations, also known as surface plasmons or polaritons (SP) capable of extracting and storing the energy from the incident beam of electromagnetic energy.

The metallic hydrides have a central role in the production of heavy electrons, since they provide electrons that increase their mass (energy) due to the electromagnetic radiation 5 being absorbed. Indeed, the absorption of electromagnetic radiations 5 causes a relativistic effect by increasing the electrons' energy. When the electron energy reaches the threshold value of $2.531 \times m_e$, where $m_e$ is the electron mass, a heavy electron and a proton combine together producing a neutron n and a neutrino $v_e$ (see Eq. 1). According to Einstein's mass-energy equivalence, the electron has to absorb 0.7823 MeV of radiation energy in order to increase its mass 1.531 times.

$$0.782\, MeV + e^- + H^+ \rightarrow n + v_e \tag{1}$$

The reacting proton $H^+$ is provided by the water (continuous medium) injecting a hydrogen atom into the metal leaving the proton in the metal near the metal-water surface and leaving an electron in the water near the metal-water surface.

The neutrons produced in this way have extraordinary low kinetic energy and thereby low velocity (approaching zero), and are called Ultra Low Momentum Neutrons (ULMN). ULMNs have smaller energy than cold neutrons, so that they are suitable to be captured by narrow fuel nuclei, since they have extremely long quantum-mechanical wavelengths that are on the order of one to ten microns. The great size of their wave function is the source of endows ULMN with very large absorption cross-sections; it enables them to be rapidly absorbed by different nuclear fuel nuclei located anywhere within distances of up to a micron.

In order to optimize better the fuel nuclear fuel consumption with an optical radiation source during the reaction, the size of the metallic grains of the colloidal mixture should preferably have an average radius of size of ~0.1 micron. In this way, there will be optical hot spots (intense speckle patterns) on the metallic surfaces producing the heavy electrons.

In Eq. 2, a neutron absorption event is described.

$$n + {}^{A}_{Z}X \rightarrow {}^{A+1}_{Z}X \qquad (2)$$

If the metal powder of metallic colloid contains Nickel-64, the neutron absorption events produce Nickel-65 atoms as in Eq. 3.

$$n + {}^{64}_{28}Ni \rightarrow {}^{65}_{28}Ni \qquad (3)$$

The Nickel-65 is a radioisotope, and decays by beta minus decay as in Eq. 4. This decay reaction has a heat of reaction (Q-value) of 2.138 MeV, and emits gamma radiations.

$$ {}^{65}_{28}Ni \rightarrow {}^{65}_{29}Cu + e^- + \bar{\nu}_e + 2.138 \ MeV \qquad (4)$$

In Eq. 4 $e^-$ and $\bar{\nu}_e$ represent respectively an electron and an electron antineutrino.

Therefore, a Ni-64 decay reaction comprises one neutron absorption event and one beta minus decay by releasing a net excess energy of $Q$=1.356MeV as in Eq. 5. Eq. 5 describes an ideal clean nuclear reaction, which transmutes a stable Nickel atom Ni-64 into a stable copper atom Cu-65 with the unstable intermediate Nickel nucleus Ni-65 decaying in a short time period of about two and one-half hours (Ni-65 half-life = 2.517 hours, Ni-65 life-time = 3.631 hours).

$$0.782 \ MeV + e^- + H^+ \rightarrow n + \nu_e$$
$$n + {}^{64}_{28}Ni \rightarrow {}^{65}_{28}Ni \rightarrow {}^{65}_{29}Cu + e^- + \bar{\nu}_e + 2.138 MeV \qquad (5)$$

This excess energy is enormous compared with the one of a chemical reaction, and can be used for large-scale energy production. One mole of electrons has the Faraday charge of $N_A e = F = 9.648534 \times 10^4$ Coulomb so that chemical energies of the order of one electron volt have a molar energy $N_A(1eV) = F \times 1$volt$=96.48534$ KiloJoule; whereas nuclear energies of one mega electron volt have a molar energy scale $N_A(1MeV) = 9.648534 \times 10^{10}$ Joule. One reacting Nickel-64 nucleus can produce a net energy of $Q$=1.356MeV *per nuclei.* The molar energy is thereby $Q$=1.308$\times 10^{11}$ Joule/Mole. If all the Nickel-64 atoms present in one mole of Nickel-64 react at the same time by capturing $N_A$ neutrons, the net power produced is $P = (Q/\tau) = (1.308 \times 10^{11}$ Joules/Mole$)/(1.307 \times 10^4$ sec$)$ ; i.e. $P \approx 10$MegaWatt/Mole.

If the metal powder of the nuclear fuel contains Nickel-58 (68.077% of the natural abundance of Nickel), another possible decay reaction can be used to produce Cobalt by transmutation. When a Nickel-58 atom absorbs a neutron, it becomes a Nickel-59 atom (see Eq. 6).

$$n + {}^{58}_{28}Ni \rightarrow {}^{59}_{28}Ni \qquad (6)$$

Nickel-59 can decay into stable Cobalt-59 by electron capture decay. This reaction releases 1.073 MeV, but due to the long half-life (76000 years), Nickel-59 is unsuitable for energy production purposes (the mean net power produced by one mole in the half-life of Ni-59 is about 0.011 Watt). However, once the neutrons are being produced at a steady rate, repeated neutron absorptions can produce up to Ni-65 which beta decays to Cu-65 with a half life of about 2.51 hours. Therefore, the beta decay from unstable Nickel to stable copper takes place within a few hours. If the neutrons are produced in steady state, large numbers of nuclear reactions become possible. For this reason, it would be convenient to modify the isotopic composition of the natural abundance of Nickel through an enrichment process (e.g. high speed centrifugation), in order to increase advantageously the presence of Nickel-64 in the nuclear fuel. In this way, the mean net power per mole produced by the consumption of the nuclear fuel into the nuclear reactor 2 can be increased.

Other useful reactions can involve Palladium and Titanium.

If the metal powder of the nuclear fuel contains Palladium, Palladium-108 (26.460% of the natural abundance of Palladium) and Palladium-110 (11.720% of the natural abundance of Palladium) can be involved in decay reactions.

A Palladium-108 decay reaction comprises one neutron capture event and one beta minus decay by releasing a net excess energy of 334 KeV (see Eq. 7). The neutron capture event produces Palladium-109, which is a radioisotope, and the susequent beta minus decay produces stable Silver-109.

$$0.782 MeV + e^- + H^+ \rightarrow n + v_e$$
$$n + {}^{108}_{46}Pd \rightarrow {}^{109}_{46}Pd \rightarrow {}^{109}_{47}Ag + e^- + \overline{v}_e + 1.116 MeV \qquad (7)$$

If all the Palladium-108 atoms present in one mole of Palladium-108 react at the same time by capturing $N_A$ neutrons, the mean net power produced in the lifetime of Palladium-109 (19.770 hours) is about 452.791 KW. This amount of specific power makes this decay reaction interesting for energy production purposes.

A Palladium-110 decay reaction comprises one neutron capture event and two beta minus decays by releasing a net excess energy of 2.472 MeV (see Eq. 8). The neutron capture event produces unstable Palladium-111, then the first beta minus decay produces unstable Silver-111, and the second beta minus decay produces stable Cadmium-111.

$$0.782 MeV + e^- + H^+ \rightarrow n + v_e$$
$$n + {}^{110}_{46}Pd \rightarrow {}^{111}_{46}Pd \rightarrow {}^{111}_{47}Ag + e^- + \overline{v}_e + 2.217 MeV \qquad (8)$$
$${}^{111}_{47}Ag \rightarrow {}^{111}_{48}Cd + e^- + \overline{v}_e + 1.037 MeV$$

If all the Palladium-110 atoms present in one mole of Palladium-110 react at the same time by capturing $N_A$ neutrons, the mean net power produced by the first beta decay in the lifetime of Palladium-111 (33.83 minutes) is about 68.211 MW, whereas the mean net power produced by the second beta decay in the lifetime of Silver-111 (10.8 days) is about 107.227 KW.

It is possible to appreciate that Palladium-110 can release a large amount of energy in a short time. This makes Palladium-110 decay reaction suitable to ignite other decay reactions like Nichel-64 decay reaction, which employs a less expensive element.

If the metal powder of the nuclear fuel contains Titanium, Titanium-50 (5.4% of the natural abundance of Titanium) can be involved in decay reactions.

A Titanium-50 decay reaction comprises one neutron capture event and one beta minus decay by releasing a net excess energy of 1.692 MeV (see Eq. 9). The neutron capture event produces unstable Titanium-51, and then the beta minus decay produces stable Vanadium-51.

$$0.782 MeV + e^- + H^+ \rightarrow n + v_e$$
$$n + {}^{50}_{22}Ti \rightarrow {}^{51}_{22}Ti \rightarrow {}^{51}_{23}V + e^- + \overline{v}_e + 2.474 MeV \qquad (9)$$

If all the Titanium-50 atoms present in one mole of Titanium-50 react at the same time by capturing a neutron, the mean net power produced by the beta decay in the lifetime of Titanium-51 (8.32 minutes) is about 327.029 MW.

It is easy to understand how the control of a so powerful reaction is critical to successfully operate the nuclear reactor 1 without melting it. To control the nuclear reaction, the colloidal mixture comprises a moderator.

The moderator can control the power produced by varying the production rate of ULMNs. One possible method involves interaction between gamma ray and steam produced by vaporizing the water (continuous medium) of the colloidal mixture. However, the reaction can always be slowed down by making the colloid in more dilute lumps. However, reaction rates that are too high are rarely an insoluble problem for the collective weak interaction system.

Another effect due to the presence of heavy electrons is the shielding effect. Heavy electrons can scatter a high photon radiation into several low energy radiations by limiting the quantity of high-energy radiation emitted by the nuclear reaction. In this way, almost all the gamma rays produced by the reaction can be converted into infrared radiations in a very high efficient way. Infrared radiations produces heat, which can be easily transformed into electricity by using well-known means like steam turbines, Stirling engines, or the like.

In order to produce enough excess energy, it is necessary to have the possibility to produce a large amount of ULMNs. The expected ULMN production rates may be numerically estimated in the following manner. The effective energy W of an electron of mass m within the metal in a fluctuating electric field **E** due to the surface plasma frequency $\Omega$ is given by

$$W = \sqrt{m^2 c^4 + c^2 p^2} = mc^2 \beta = mc^2 \sqrt{1 + \frac{E^2}{E_0{}^2}} \ ,$$

$$\beta = \sqrt{1 + \frac{P}{P_0}} \quad \text{wherein} \quad P_0 = \frac{c}{4\pi} E_0{}^2 , \qquad (10)$$

$$E_0 = \frac{mc\Omega}{e} = \left(\frac{mc^2}{e}\right)\frac{2\pi}{\Lambda} \quad \text{and} \quad P = \frac{c}{4\pi} E^2 .$$

(i) The electron momentum is p.

(ii) $\Omega$ is the surface plasma frequency and $\Omega\Lambda$ is light speed c.

(iii) The most simple derivation of Eq.(10) is obtained by relating the rate of change of the electron momentum $p$ to the electric field force $eE$ and time averaging over the surface plasma cycles.

(iv) The reference intensity is $P_0 \approx (2.736334 \times 10^{10} \text{ watt} / \Lambda^2)$.

(v) For experimentally measured radio frequency surface plasma oscillations, $\Lambda \sim 100\text{cm}$ yielding $P_0 \sim 3 \times 10^6 \text{ watt/cm}^2$.

(vi) The incident electromagnetic intensity is $P_i$.

(vii) The intensity $P = AP_i$ define $\beta = \sqrt{1 + A\left(\frac{P_i}{P_0}\right)} \sim \sqrt{1 + A \times 10^{-4}}$ .

(viii) If $P_i \sim 300 \text{ watt} / \text{cm}^2$, then

(ix) The threshold energy to create a neutron via Eq. 1 corresponds to $\beta_0 \approx 2.531$

(x) If $A \sim 5 \times 10^6$ is obtained, then $\beta \sim 20$ far above threshold.

The ULMN production rate $\overline{\omega_2} \approx v\,(\beta - \beta_0)^2$ yields the final estimate of the nuclear reaction rate per unit grain surface area, which is $\overline{\omega_2} \sim 10^{15} \text{ Hz/cm}^2$.

To start the nuclear reactor 1, a method for igniting and controlling this reactor 1 is now described. The method comprises the following steps:

a) filling the reaction chamber 3 with a metallic powder containing Nickel and/or Palladium and/or Titanium;
b) filling the reaction chamber 3 with water by creating the colloidal mixture of metallic powder in water;
c) sealing the reaction chamber 3 with the sealed container 4,
d) waiting until the volume defined by the sealed container 4 above the reaction chamber 3 contains water vapor at saturated vapor pressure;
e) irradiating the colloidal mixture by using the electromagnetic radiations 5;
f) controlling the nuclear reactor (1) by adjusting the incident radiation intensity.

From the foregoing it can be appreciated that the reactor according to the present invention can be exploited for the production of electric power, thermal energy, or other forms of useful energy (i.e. mechanical).

It is understood that variants of the nuclear reactor 1 and/or variants of the method for igniting and controlling the nuclear reactor 1 still fall within the scope of the invention as defined by the following claims.

## Claims

1. Nuclear reactor (1), comprising a vessel (2), a reaction chamber (3) located in the vessel (2), nuclear fuel contained in the reaction chamber (3), wherein said nuclear reactor (1) comprises a radiation source suitable for providing electromagnetic radiations (5) to the nuclear fuel contained in the reaction chamber (3), wherein the nuclear fuel comprises a colloidal mixture, **characterized in that** said nuclear fuel is capable of producing Ultra Low Momentum Neutrons (ULMNs) when subjected to said electromagnetic radiations (5), the wavelength of which is on the order of 1 to 10 micrometres and the nuclear fuel comprises particles with a radius similar to the wavelength of said electromagnetic radiations (5), wherein said Ultra Low Momentum Neutrons are suitable for capture by the nuclei of the nuclear fuel.

2. Nuclear reactor (1) according to claim 1, wherein the nuclear fuel comprises atoms of elements with a low atomic number (Z) and a low mass number (A).

3. Nuclear reactor (1) according to any of the preceding claims, wherein the nuclear fuel comprises one or more of the following elements: Lithium (Li), Nickel (Ni), Copper (Cu), Palladium (Pd), Titanium (Ti), or isotopes of said elements.

4. Nuclear reactor (1) according to any of the preceding claims, wherein the nuclear fuel comprises a colloidal mixture with an aqueous solution (continuous medium) and a metal powder dispersed therein, having particles of dimensions in a range from $10^{-6}$ to $10^{-9}$ m.

5. Reaction process of a nuclear fuel for the production of Ultra Low Momentum Neutrons (ULMNs), said fuel comprising elements having a low atomic number (Z) and a low mass number (A),
   **characterized by** comprising the steps of:

   a. prepare a colloidal mixture of metallic powder comprising one or more of the following elements: Lithium, Nickel, Copper, Palladium, Titanium, or isotopes thereof;
   b. irradiating the colloidal mixture by using an electromagnetic radiations (5), wherein the wavelength of said electromagnetic radiations (5) is substantially similar to the radius of the grains of the metallic powder comprised in the colloidal mixture.

6. Reaction process according to claim 5, wherein said reaction process is controlled by varying the intensity of an electromagnetic radiations (5).

## Patentansprüche

1. Kernreaktor (1) mit einem Behälter (2), einer in dem Behälter (2) vorgesehenen Reaktionskammer (3) und in der Reaktionskammer (3) enthaltenem Kernbrennstoff,
   wobei der Kernreaktor (1) eine Strahlungsquelle umfasst, die geeignet ist, elektromagnetische Strahlung (5) an den in der Reaktionskammer (3) enthaltenen Kernbrennstoff zu liefern, wobei der Kernbrennstoff ein kolloidales Gemisch enthält, **dadurch gekennzeichnet, dass** der Kernbrennstoff in der Lage ist, Neutronen mit ultraniedrigem Impuls (Ultra Low Momentum Neutrons, ULMNs) zu erzeugen, wenn er der elektromagnetischen Strahlung (5) ausgesetzt ist, die eine Wellenlänge in der Größenordnung von 1 bis 10 Mikrometer aufweist, und dass der Kernbrennstoff Teilchen enthält, deren Radius ähnlich der Wellenlänge der elektromagnetischen Strahlung (5) ist, wobei die Neutronen mit ultraniedrigem Impuls geeignet sind, von den Kernen des Kernbrennstoffs eingefangen zu werden.

2. Kernreaktor (1) nach Anspruch 1, wobei der Kernbrennstoff Atome von Elementen mit einer niedrigen Atomzahl (Z) und einer niedrigen Massenzahl (A) enthält.

3. Kernreaktor (1) nach einem der vorstehenden Ansprüche, wobei der Kernbrennstoff eines oder mehrere der folgenden Elemente enthält: Lithium (Li), Nickel (Ni), Kupfer (Cu), Palladium (Pd), Titan (Ti) oder Isotope dieser Elemente.

**4.** Kernreaktor (1) nach einem der vorstehenden Ansprüche, wobei der Kernbrennstoff ein kolloidales Gemisch mit einer wässrigen Lösung (kontinuierliches Medium) und ein darin fein dispergiertes Metallpulver enthält, dessen Teilchen eine Größe im Bereich von $10^{-6}$ bis $10^{-9}$ m aufweisen.

**5.** Reaktionsverfahren eines Kernbrennstoffs zur Erzeugung von Neutronen mit ultraniedrigem Impuls (ULMNs), wobei der Brennstoff Elemente mit einer niedrigen Atomzahl (Z) und einer niedrigen Massenzahl (A) enthält, **dadurch gekennzeichnet, dass** das Verfahren folgende Schritte umfasst:

a. Herstellen eines kolloidalen Gemischs aus Metallpulver, das eines oder mehrere der folgenden Elemente enthält: Lithium, Nickel, Kupfer, Palladium, Titan oder Isotope dieser Elemente;
b. Bestrahlen des kolloidalen Gemischs mittels der elektromagnetischen Strahlung (5), wobei die Wellenlänge der elektromagnetischen Strahlung (5) im Wesentlichen ähnlich dem Radius der Körner des in dem kolloidalen Gemisch enthaltenen Metallpulvers ist.

**6.** Reaktionsverfahren nach Anspruch 5, wobei das Reaktionsverfahren durch die Veränderung der Stärke der elektromagnetischen Strahlung (5) gesteuert wird.


**Revendications**

**1.** Réacteur nucléaire (1), comprenant une cuve (2), une chambre de réaction (3) située dans la cuve (2), du combustible nucléaire contenu dans la chambre de réaction (3),

dans lequel ledit réacteur nucléaire (1) comprend une source de rayonnement apte à fournir des rayonnements électromagnétiques (5) au combustible nucléaire contenu dans la chambre de réaction (3),
dans lequel le combustible nucléaire comprend un mélange colloïdal,
**caractérisé en ce que** ledit combustible nucléaire est capable de produire des neutrons à quantité de mouvement ultra-faible (ULMNs) lorsqu'il est soumis auxdits rayonnements électromagnétiques (5), dont la longueur d'onde est de l'ordre de 1 à 10 micromètres et le combustible nucléaire comprend des particules avec un rayon similaire à la longueur d'onde desdits rayons électromagnétiques (5), dans lequel lesdits neutrons à quantité de mouvement ultra-faible sont appropriés pour être capturés par les noyaux du combustible nucléaire.

**2.** Réacteur nucléaire (1) selon la revendication 1, dans lequel le combustible nucléaire comprend des atomes d'éléments avec un faible nombre atomique (Z) et un faible nombre de masse (A).

**3.** Réacteur nucléaire (1) selon l'une quelconque des revendications précédentes, dans lequel le combustible nucléaire comprend un ou plusieurs des éléments suivants : du lithium (Li), du nickel (Ni), du cuivre (Cu), du palladium (Pd), du titane (Ti) ou des isotopes desdits éléments.

**4.** Réacteur nucléaire (1) selon l'une quelconque des revendications précédentes, dans lequel le combustible nucléaire comprend un mélange colloïdal avec une solution aqueuse (milieu continu) et une poudre métallique qui y est dispersée, ayant des particules de dimensions comprises dans une plage de $10^{-6}$ à $10^{-9}$ m.

**5.** Procédé de réaction d'un combustible nucléaire pour la production de neutrons à quantité de mouvement ultra-faible (ULMN), ledit combustible comprenant des éléments ayant un faible nombre atomique (Z) et un faible nombre de masse (A),
**caractérisé en ce qu'**il comprend les étapes :

a. de préparation d'un mélange colloïdal de poudre métallique comprenant un ou plusieurs des éléments suivants : du lithium, du nickel, du cuivre, du palladium, du titane, ou des isotopes de ceux-ci ;
b. d'irradiation du mélange colloïdal en utilisant des rayonnements électromagnétiques (5), dans lequel la longueur d'onde desdits rayonnements électromagnétiques (5) est sensiblement similaire aux rayons des grains de la poudre métallique comprise dans le mélange colloïdal.

**6.** Procédé de réaction selon la revendication 5, dans lequel ledit procédé de réaction est contrôlé en variant l'intensité des rayonnements électromagnétiques (5).

Prior Art

Fig. 1

Fig. 2

Fig. 3

**EP 2 805 330 B1**

**REFERENCES CITED IN THE DESCRIPTION**

**Patent documents cited in the description**

- IT 2008000532 W
- WO 2009125444 A1
- US 7893414 B2
- WO 2011123338 A1